# EUROPÄISCHE PATENTSCHRIFT

(11) **EP 1 083 354 B1**
(45) Veröffentlichungstag und Bekanntmachung des Hinweises auf die Patenterteilung: **17.04.2002**
(21) Anmeldenummer: 99117082.0
(22) Anmeldetag: 31.08.1999
(51) Int. Cl.: F16C 33/76, F16C 33/74, F16C 33/58, F16C 35/077, F16C 35/067, F16J 15/32

(54) **Lager- und Dichtungsanordnung für eine Welle in einer Gehäusebohrung**
Bearing and sealing arrangement for a shaft in a housing bore
Agencement de palier et d'étanchéité pour un arbre disposé dans un alésage

(43) Veröffentlichungstag der Anmeldung: 14.03.2001
(73) Patentinhaber: Ford Global Technologies, Inc., A subsidiary of Ford Motor Company, Dearborn, Michigan 48126 (US)
(72) Erfinder: Premiski, Vladimir, 33980 Audenge (FR); Feiten, Ralf, 50259 Pulheim (DE)
(74) Vertreter: Drömer, Hans-Carsten, Dipl.-Ing.

(56) Entgegenhaltungen:
- EP-A- 0 116 195
- EP-A- 0 596 196
- FR-A- 2 254 241
- US-A- 3 627 391
- US-A- 4 903 971

## Beschreibung

Die Erfindung bezieht sich auf ein Lager mit integrierter Dichtung für eine Welle in einer Gehäusebohrung, der im Oberbegriff des Patentanspruches 1 erläuterten Art.

Aus der US 3 627 391 ist ein Lager mit integrierter Dichtung bekannt. Ein Außenring dient als Lagerfläche für die Lagerrollen. Weiterhin weist der Außenring zum Gehäuseinneren einen Absatz auf, der die axiale Bewegung der Lagerrollen zum Gehäuseinneren hin begrenzt. Zur Gehäuseaußenseite hin ist im Außenring ein hülsenförmiger Dichtungsträger angeordnet, der zum einen die radiale Bewegung der Lagerrollen zur Gehäuseaußenseite hin begrenzt, und zum anderen an einem radialen Umfangsflansch einen Radialwellendichtring trägt, wobei der Dichtungsträger über eine Umfangsschweißung fest mit dem Außenring verbunden ist.

Bei dieser Anordnung läßt sich der Radialwellendichtring kaum ohne Beschädigung entweder des Lagers oder des Dichtringes selber wechseln, d. h. es muß immer das gesamte Lager mit integrierter Dichtung gewechselt werden, sobald am Lager und/oder der Dichtung ein Defekt auftritt.

Aus der FR 2 254 241 ist ein weiteres Lager mit integrierter Dichtung bekannt. Der Außenring des Lagers weist dabei einen radialen Absatz auf, der den Außenring in einen Lagerbereich mit kleinerem Durchmesser zur Aufnahme der Lagerrollen und einen Dichtungsbereich mit größerem Durchmesser zur Aufnahme der Radialwellendichtung teilt. Zwar kann hier die Dichtung unabhängig vom Lager selbst gewechselt werden, jedoch ist der Außenring und das Lager selbst aufgrund der vielen weiteren benötigten Bauteile sehr aufwendig in der Fertigung.

Aufgabe der Erfindung ist es daher, die vorgenannten Nachteile zu vermeiden.

Gemäß der Erfindung wird diese Aufgabe gelöst, indem bei einem Lager mit integrierter Dichtung für eine Welle in einer Gehäusebohrung der im Oberbegriff des Patentanspruches 1 erläuterten Art die im Kennzeichenteil des Patentanspruches 1 aufgezeigten Merkmale angewendet werden.

Dadurch, daß der Außenring sich über den unmittelbaren Lagerbereich axial nach außen erstreckt und den axialen Abschnitt des Tragringes des Radialwellendichtringes außerhalb der Gehäusebohrung am Außendurchmesser mit Preßsitz aufnimmt, wird eine günstig zu montierende Baueinheit geschaffen und dennoch die präzise Einhaltung von Achsabständen von Getriebewellen sichergestellt.

Weitere zweckmäßige Ausführungsdetails sind in den weiteren Ansprüchen erläutert.

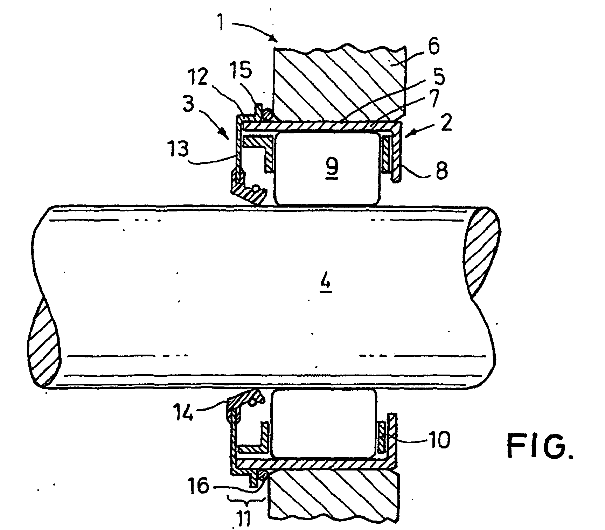

Die Erfindung wird anhand eines in der Figur gezeigten Ausführungsbeispieles näher erläutert. Die Figur zeigt einen vertikalen Schnitt durch eine erfindungsgemäße Lager- und Dichtungsanordnung für eine Welle in einer Gehäusebohrung, bei der die Lageranordnung als ein an sich bekanntes Rollen- oder Nadelwälzlager ausgebildet ist.

Die Lager- und Dichtungsanordnung für ein Gehäuse 1 besteht im wesentlichen aus einer Lageranordnung 2 und einer Dichtungsanordnung 3.

Die Lageranordnung 2 ist vorgesehen, um eine Welle 4, z.B. eine Getriebewelle auf der hochpräzise Zahnradsätze angeordnet sind, in einer Gehäusebohrung 5 einer Wandung 6 eines Gehäuses 1 so zu lagern, daß Achsabstände im Bereich von 100stel Millimeter präzise eingehalten werden können.

Die Lageranordnung 2 besteht aus einem Außenring 7 mit einem radial nach innen abgewinkelten Bord 8, in dem ein eine Vielzahl von Rollen 9 führender Käfig 10 aus einem geeigneten Material angeordnet ist. Die Rollen 9 stützen hierbei die Welle 4 unmittelbar auf einer entsprechend fein bearbeiteten Lauffläche ab.

Der Außenring 7 der Lageranordnung 2 weist einen sich über den unmittelbaren Lagerbereich axial nach außen erstreckenden Abschnitt 11 auf.

Die Dichtungsanordnung 3 besteht aus einem metallischen Tragring 12 mit einem radial nach innen abgewinkelt Bord 13, der eine an sich bekannte Radialwellendichtringanordnung 14 aufnimmt. Der Tragring 12 weist an seinem sich axial erstreckenden Bereich einen nach außen abgewinkelten Bord 15 auf, der mit einem benachbart der Gehäusebohrung 5 angeordneten O-Ring 16 zusammenwirkt.

Der axial nach außen vorkragende Abschnitt 11 des Außenringes 7 der Lageranordnung 2 nimmt hierbei den axialen Abschnitt des Tragringes 12 mit Preßsitz auf. Der radial nach innen abgewinkelte Bord 13 stützt hierbei den Käfig 10 der Rollen 9 in axialer Richtung ab. Damit kann der Außenring 7 einfacher hergestellt werden, da nur ein Bord 8 erforderlich ist.

Die erfindungsgemäße Lager- und Dichtungsanordnung weist den Vorteil auf, daß die die Lager- und Dichtungsanordnung aufnehmende Gehäusebohrung 5 als einfach zu bearbeitende Durchgangsbohrung ausgebildet werden kann und die Lager- und Dichtungsanordnung einfach montiert werden kann.

Weiterhin weist sie den besonderen Vorteil auf, daß die Dichtungsanordnung 3 im Falle einer Beschädigung der Dichtlippe des Radialwellendichtringes ausgetauscht werden kann.

## Patentansprüche

1. Lager mit integrierter Dichtung für eine Welle in einer Gehäusebohrung,
wobei das Lager (2) über einen Außenring (7) in der Gehäusebohrung (5) eines Gehäuses (1) aufgenommen ist, das Lager (2) die Welle (4) über im Lager (2) angeordnete Gleit- oder Wälzlager-Elemente (9) abstützt, am Außenring (7) ein Tragring (12) eines Radialwellendichtringes (14) aufgenommen ist, und der Außenring (7) einen sich über den unmittelbaren Lagerbereich in der Gehäusebohrung (5) axial außerhalb des Gehäuses (1) sich erstreckenden Außenabschnitt (11) aufweist,
**dadurch gekennzeichnet, daß**
der axiale Abschnitt des Tragringes (12) auf dem Außenabschnitt (11) des Außenringes (7) am Außendurchmesser des Außenringes (7) mit Preßsitz aufgenommen ist.

2. Lager mit integrierter Dichtung nach Anspruch 1,
**dadurch gekennzeichnet, daß**
der axiale Abschnitt einen nach außen abgewinkelten Bord (15) zur Belastung eines O-Ringes (16) zur Gehäusebohrung (5) hin aufweist.

## Claims

1. Bearing having an integrated seal for a shaft in a housing bore, the bearing (2) being held in the housing bore (5) of a housing (1) via an outer ring (7), the bearing (2) supporting the shaft (4) via sliding- or rolling-bearing elements (9) arranged in the bearing (2), a supporting ring (12) of a radial-shaft sealing ring (14) being held on the outer ring (7), and the outer ring (7) having an outer section (11) which extends axially outside the housing (1) over the immediate bearing region in the housing bore (5), **characterized in that** the axial section of the supporting ring (12) on the outer section (11) of the outer ring (7) is held on the outer diameter of the outer ring (7) by a press fit.

2. Bearing having an integrated seal according to Claim 1, **characterized in that** the axial section has an outwardly angled edge (15) for loading an O-ring (16) towards the housing bore (5).

## Revendications

1. Palier avec joint intégré pour un arbre dans un alésage de carter, le palier (2) étant reçu pardessus une bague externe (7) dans l'alésage de carter (5) d'un carter (1), le palier (2) supportant l'arbre (4) par le biais d'éléments de palier à roulement ou lisse (9) disposés dans le palier (2), une bague de support (12) d'une bague d'étanchéité d'arbre radial (14) étant reçue sur la bague externe (7), et la bague externe (7) présentant une portion externe (11) s'étendant axialement en dehors du carter (1) sur la zone de palier directe dans l'alésage de carter (5),
**caractérisé en ce que**
la portion axiale de la bague de support (12) est reçue sur la portion externe (11) de la bague externe (7) sur le diamètre extérieur de la bague externe (7) avec un ajustement serré.

2. Palier avec joint intégré selon la revendication 1, **caractérisé en ce que** la portion axiale présente un bord (15) coudé vers l'extérieur pour la sollicitation d'un joint torique (16), en direction de l'alésage de carter (5).
